Europäisches Patentamt

European Patent Office

Office européen des brevets

(19)

(11) Veröffentlichungsnummer : **0 193 620**
**B1**

(12) **EUROPÄISCHE PATENTSCHRIFT**

(45) Veröffentlichungstag der Patentschrift :
11.11.87

(51) Int. Cl.⁴ : **E 02 B 15/04**

(21) Anmeldenummer : 84114977.6

(22) Anmeldetag : 07.02.85

(54) Ölfänger oder Ölaufnehmer.

(43) Veröffentlichungstag der Anmeldung :
10.09.86 Patentblatt 86/37

(45) Bekanntmachung des Hinweises auf die Patenterteilung : 11.11.87 Patentblatt 87/46

(84) Benannte Vertragsstaaten :
DE FR GB NL

(56) Entgegenhaltungen :
CH-A-   596 390
DE-A- 3 332 671
FR-A- 2 490 260
US-A- 3 517 812
US-A- 4 120 793

(73) Patentinhaber : Husnik, Franz
Weiherstrasse 19 a
D-5912 Hilchenbach 4 (DE)

(72) Erfinder : Husnik, Franz
Weiherstrasse 19 a
D-5912 Hilchenbach 4 (DE)

**Beschreibung**

Die Erfindung betrifft eine Ölauffangvorrichtung zum Einbau an Tankschiffen, wie sie im Oberbegriff des Patentanspruchs definiert ist.

Eine derartige Ölauffangvorrichtung ist zum Beispiel durch die FR-A-2 490 260 bekannt.

Der Erfindung liegt die Aufgabe zugrunde, eine relativ einfache, jedoch allen Anforderungen hinsichtlich sicherer Aufnahme des Öls und dessen raumsparender Lagerung gerecht werdende Vorrichtung zum Einbau im Tanker zu schaffen.

Diese Aufgabe wird durch die im Patentanspruch gekennzeichneten Merkmale gelöst.

Die Zusatzausrüstung zum Einbau auf Tankschiffen zwecks Aufnahme von Ölteppichen infolge von Schiffs- und Bohrturmkatastrophen besteht aus zwei, dem wechselhaften Tiefgang sich selbsttätig anpassenden Auffangarmen, welche mit Hilfe eines Hydraulikzylinders auseinander und zusammenfahrbar sind. Die Auffangarme und der Hydraulikzylinder sind an einer beweglichen Platte befestigt, in welcher sich auch die Einströmöffnung befindet. Im Ölauffangbehälter befindet sich eine Nut, in welcher sich die eben genannte Platte selbsttätig auf und ab bewegen kann und somit dem unterschiedlichen Tiefgang, der ja bei zunehmender Belastung entsteht, automatisch anpasst. Aus dem Auffangbehälter gelangt das Wasser-Ölgemisch in einen Reißwolf, der etwa vorhandene Ölklumpen zerkleinert und an die Pumpe weiterleitet. Die Pumpe drückt das Ölgemisch in die auf dem Vorderdeck befindliche, elektronisch gesteuerte Kläranlage. Das auf diese Art wieder gewonnene Öl gelangt von da durch ein Überlaufrohr in die aufnahmebereiten Tankabteilungen und das Wasser fließt durch das elektronisch gesteuerte Magnetventil ins Meer zurück.

Da dieses Verfahren nicht so aufwendig ist, besteht die Möglichkeit, viele Tanker damit auszurüsten, somit auch viel eher als bisher am Katastrophenherd zu erscheinen.

Einzelne Details sind in den Zeichnungen aufgeführt.

Es zeigen :

Abb. 1 eine Zusatzausrüstung für Tankschiffe zum Einfangen von Ölteppichen im offenen Meer, sowie auch im Süßwasser, mit mechanischer, selbsttätiger Auffangluke, welche sich automatisch dem jeweiligen Tiefgang anpaßt,

Abb. 2 die in einer Nut selbsttätig gleitende Platte,

Abb. 3 die Ölauffangarme in zusammengeklappten Zustand,

Abb. 4 Zylinder für das Öffnen und Schließen der Auffangarme,

Abb. 5 die Darstellung des Flutventils im Innern des Schwimmkörpers,

Abb. 6 die Ölauffangarme im aufgeklappten Zustand und somit in Aktionsbereitschaft zur Aufnahme von Ölteppichen, und

Abb. 7 die Kläranlage mit Überlaufrohr und einen Schwimmer, der die elektrische Schaltung für das Magnetventil am Wasserabflußrohr betätigt.

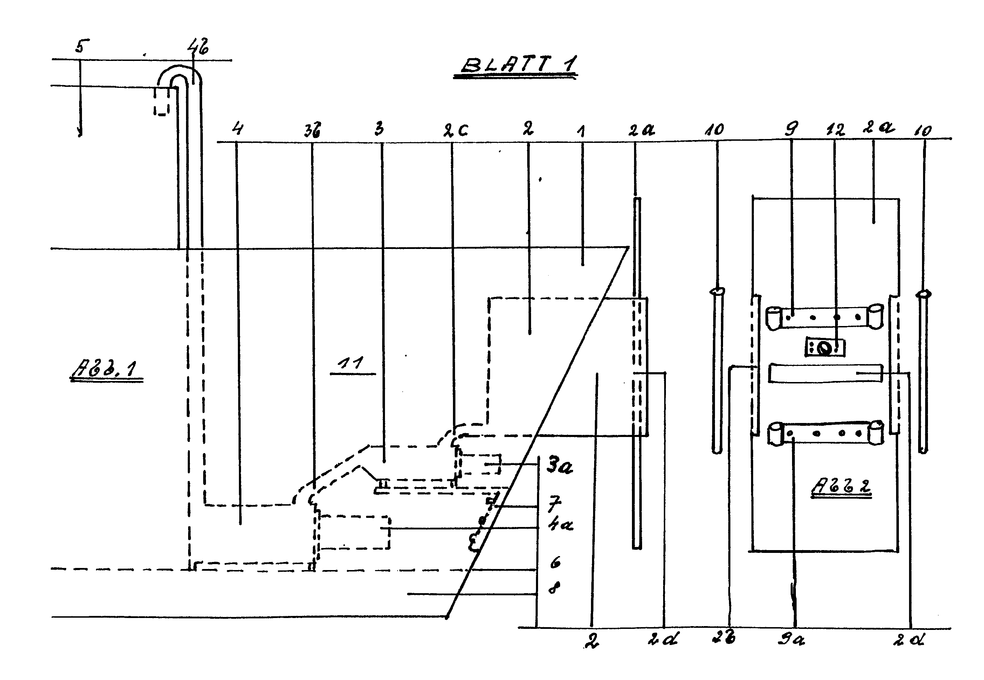

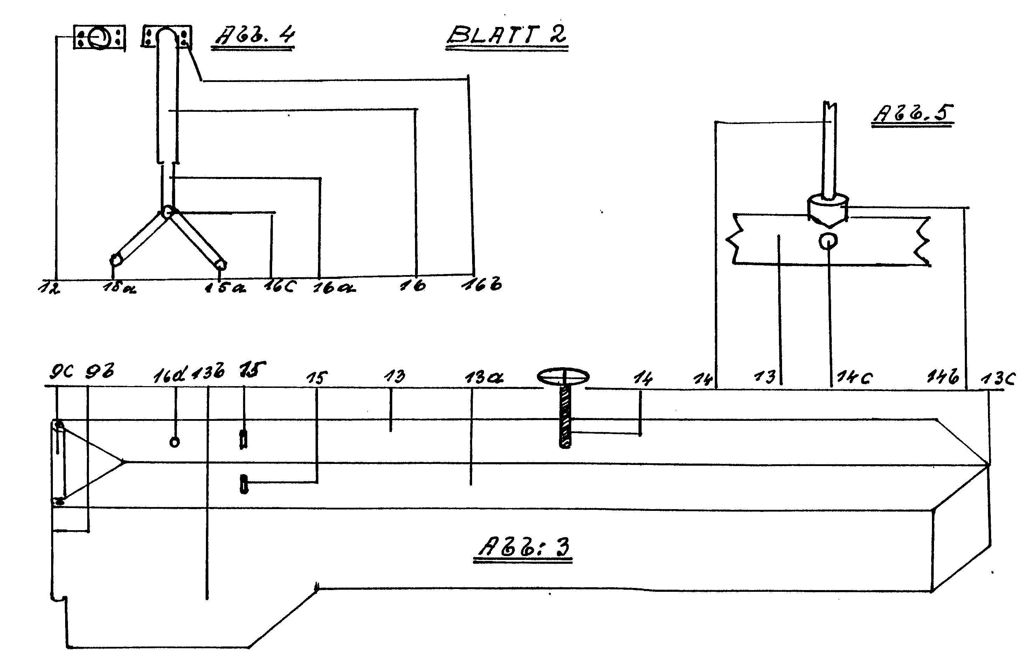

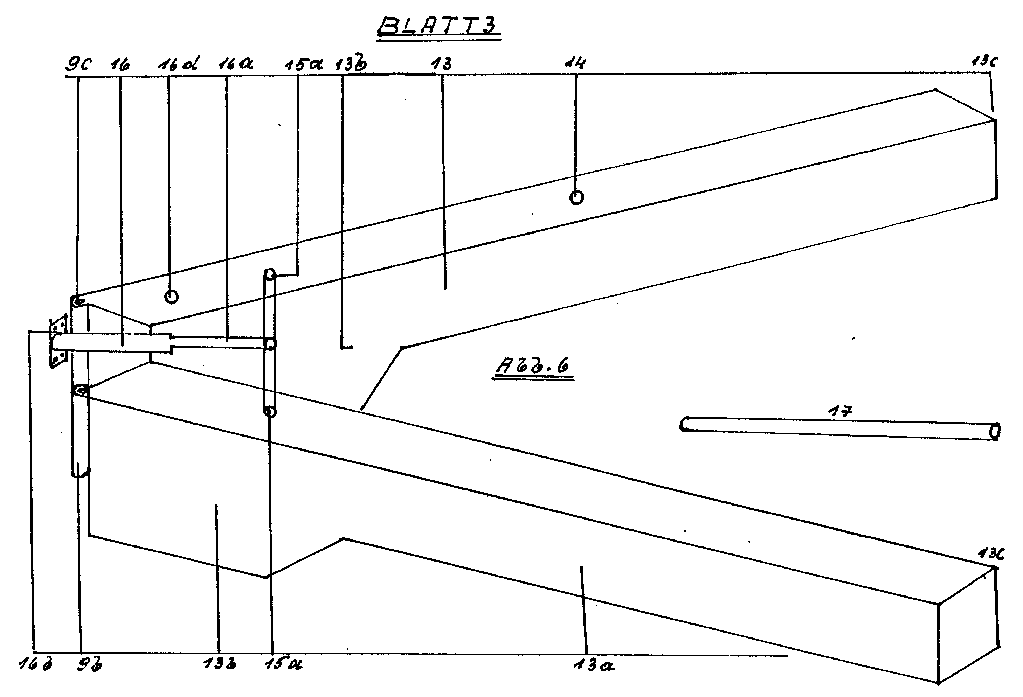

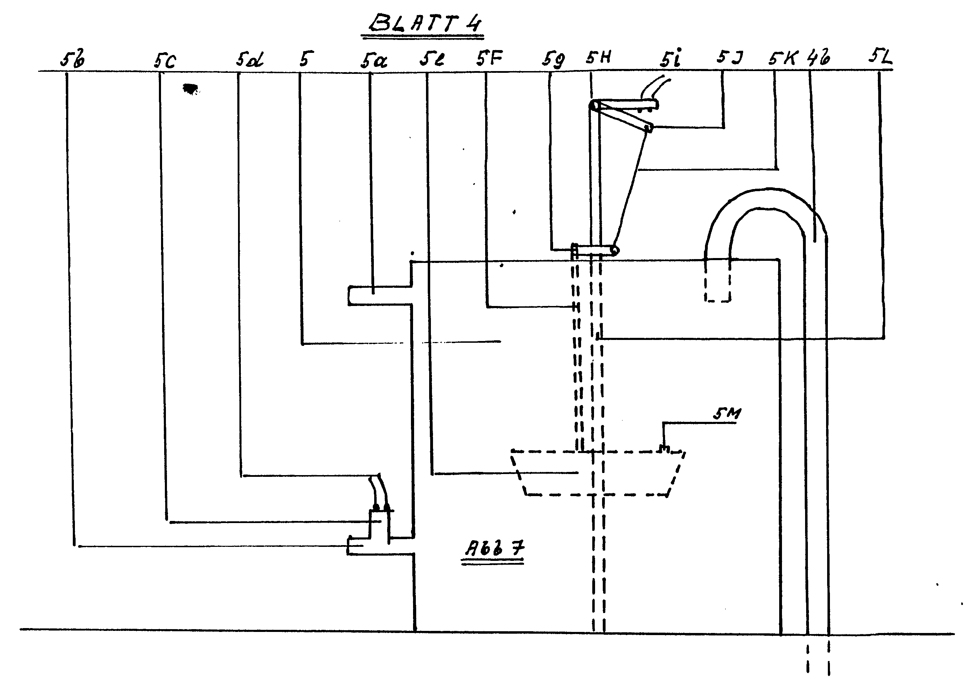

Der Ölauffangbehälter 2 wird im Bug eines Tankers eingebaut und dicht verschweißt. Die Höhe des Auffangbehälters sollte mindestens 250 bis 500 Millimeter mehr betragen, als die Differenz des Tiefgangs bei unbeladenen und beladenen Schiff beträgt. Der aus dem Bug herausragende Teil ist rechts und links an den Innenseiten mit einer gut gleitbaren Nut 2b zu versehen, damit die Platte 2a gut auf und ab gleiten kann und somit selbsttätig die Einströmöffnung 2d stets in die richtige Lage zum jeweiligen Tiefgang bringen kann. An der Platte 2a werden die Scharniere 9 und 9a angebracht, an welchen die Auffangarme 13 und 13a mit den Bolzen 10 befestigt werden. Die Scharnierteile an den Auffangarmen 9b und 9c werden mit den an der Platte 2a befestigten Scharnieren 9 und 9a verbunden. Die Einströmöffnung 2d in der Platte 2a sollte zur Erhöhung der Genauigkeit erst dann herausgebrannt werden, wenn der Tanker mit den montierten Auffangarmen im Wasser liegt. Von der Einströmöffnung 2d gelangt das Wasser- und Ölgemisch in den Auffangbehälter 2, durchfließt den Reißwolf 3, betrieben vom Motor 3a, gelangt von da in die Pumpe 4, betrieben vom Motor 4a und wird durch die Rohrleitung 4b in die Kläranlage gedrückt, wo das Wasser vom Öl getrennt wird. Da die Tragfähigkeit der Auffangarme 13 und 13a von dem Gewicht des Wassers, infolge des unterschiedlichen Salzgehaltes abhängig ist, ist zur Regulierung des Tiefganges der Arme ein Flutventil 14 und eine verschließbare Öffnung 16d vorgesehen. Mit Fluten und Lenzen kann die Einströmöffnung immer auf die richtige Tiefe eingestellt werden. Die beiden Arme sind unterhalb des Bodens, an der engsten und tiefsten Stelle mit einen Schlauch verbunden, damit der Wasserspiegel in beiden Armen gleich bleibt. Der Hydraulikzylinder 16 und seine Gestänge 15a werden mit seiner Bodenplatte 16b auf der Stelle 12 befestigt. Auf den Auffangarmen befinden sich zwei aufgeschweißte Bolzen 15, welche mit den Gelenkstangen 15a verbunden werden. Sie dienen zum Aufklappen und Zusammenklappen der Auffangarme. Im zusammengeklappten Zustand kann die normale Reisegeschwindigkeit beibehalten werden. Mit dieser Ausrüstung ist man immer zum Eisatz bereit. An der Unglücksstelle angekommen, braucht man nur mit dem Hydraulikzylinder die Arme auseinander fahren und die Anlage in Gang setzen.

Der Ort der Kläranlage ist in Bugnähe eingeplant. Da das Öl der leichtere Teil ist, wird es durch das am Behälter 5 angebrachte Überlaufrohr 5a in die Tanks abgeleitet. Die Ableitung des Wassers erfolgt über das Abflußrohr 5b, welches von dem Magnetventil reguliert wird. Es tritt in Aktion, wenn die Stromleitung von 5d von der Leitung 5i einen Impuls bekommt. Dieser Impuls wird von den Schwimmer 5e ausgelöst. Er muß so schwer sein, daß er im Öl untertaucht, aber auf

dem Wasser schwimmt. Um diesen Zustand genau zu erreichen, ist die verschließbare Öffnung 5M vorgesehen und kann mit Flüssigkeit ausgeglichen werden. In der Mitte ist der Schwimmer mit einer abgedichteten Öffnung durchbrochen. Mit dieser Öffnung gleitet er auf der Gleitstange 5L mit dem Wasserspiegel auf und ab. Auf dem Schwimmer ist eine Stange angeschweißt und obenauf mit einer durchbrochenen Lasche 5g verbunden, die ebenfalls auf der Gleitstange 5L im gleichen Rhythmus mitgleitet. Auf der Gleitstange 5L befindet sich oben ein Gelenkkopf mit einer waagrechten, feststehenden Kontaktplatte 5H und einer beweglichen Platte, die bei genügend gestiegenen Wasserspiegel von der Lasche 5g hochgedrückt wird, somit den Impuls zum Wasserabfluß auslößt. Die bewegliche Platte ist mit 5j bezeichnet. Die bewegliche Kontaktplatte 5j ist mit der auf und ab gleitenten Lasche 5g mit einer Reißleine 5k verbunden. Sobald der Wasserspiegel bis zur erlaubten Grenze gesunken ist, wird mit Hilfe der Reißleine 5k die bewegliche Platte 5j heruntergezogen, damit wird auch der Stromkreislauf unterbrochen und der Wasserabfluß gestoppt. Dieser Vorgang wiederholt sich immer wieder mit dem steigenden und fallenden Wasserspiegel, somit kann diese Kläranlage ohne Aufsicht funktionieren. Der Schwimmer 5e ist in der Mitte zylindrisch offen, da er auf der Gleitstange 5L auf und ab gleitet. Auf dem Schwimmer 5e befindet sich die verschließbare Öffnung 5M, damit wird das Gewicht reguliert. Der Schwimmer muß im Öl untertauchen, aber auf dem Wasser schwimmen. Auf dem Schwimmer ist eine Stange 5f montiert, mit einer am oberen Ende befestigten Lasche 5g, die ebenfalls, aber am oberen Ende der Gleitstange 5L, auf und ab gleitet. Oben angekommen, drückt die Lasche auf die herabhängente Kontaktplatte 5j und schließt somit den Stromkreis zum Magnetventil, das Wasser kann abfließen. Sobald der Wasserspiegel bis zur erlaubten Grenze gesunken ist, wird der Stromkreis mit Hilfe der Reißleine 5k unterbrochen, das Magnetventil schließt sich.

Positionsliste :

1 = Schiffskörper
2 = Auffangbehälter
2a = Selbsttätig verschiebbare Platte mit der Einströmöffnung 2d und den Scharnieren 9 und 9a, sowie der Markierung 12 zum Befestigen des Zylinders
2b = Nut im Affangbehälter, worin die Platte 2a gleitet
2c = Abgang zum Reißwolf, der vorhandene Klumpen zerkleinert
2d = Einströmöffnung in der Platte 2a
3 = Reißwolf
3a = Motor
3b = Abgang zur Pumpe
4 = Pumpe zum Hochpumpen in den Klärbehälter 5
4b = Rohrleitung von der Pumpe 4 zum Klärbehälter 5

5 = Klärbehälter
5a = Überlaufrohr für den Ölabfluß zu den Tankschotten
5b = Wasserabflußrohr mit Magnetventil 5c
5c = Magnetventil
5d = elektrische Zuleitung zum Magnetventil 5c
5e = Schwimmer
5f = auf dem Schwimmer befestigte Stange 5f mit Lasche 5g
5H = Gelenkkopf mit einer feststehenden und beweglichen Platte
5i = Zuleitungskabel zur feststehenden Kontaktplatte 5H
5j = bewegliche Kontaktplatte
5k = Reißleine für die Stromkreisunterbrechung
5L = Gleitstange, auf die sich der Schwimmer 5e und die Lasche 5g auf und ab bewegt
5M = verschließbare Öffnung im Schwimmer für die Gewichtsregulierung
6 = Boden für die Pumpe 4
7 = Konsole für die Reißwolfbefestigung
8 = Ballasttank
9 = oberes Scharnier für die Auffangarme 13 und 13b
9a = unteres Scharnier für den gleichen Zweck wie bei 9
9b = Scharnier am rechten Schwimmarm 13a
9c = Scharnier am linken Schwimmarm 13
10 = Befestigungsbolzen zu den Scharnieren
11 = Tiefgangslinie
12 = an dieser Stelle wird der Hydraulikzylinder zum Auf- und Zusammenklappen der Ölauffangarme befestigt
13 = linker Auffangarm
13a = rechter Auffangarm
13b = vergrößerter Wasserverdrängungsraum, damit die selbsttätige Platte 2a nicht klemmt
13c = schrägverlaufende Bugspitze
14 = Gewindestange
14b = Gummikolben
14c = Bodenöffnung im Arm 13, die mit den Kolben 14b auf und zu verschließbar ist
15 = aufgeschweißte Bolzen zum Einhängen der Zylinderarme
15a = linker und rechter Gelenkarm
16 = Zylindergehäuse
16a = Kolbenstange mit Gelenkkopf 16c
16b = Zylinderbodenplatte zur Befestigung auf der selbsttätig verschiebbaren Platte 2a
16c = Gelenkkopf, verbunden mit den Gelenkarmen 15a
16d = verschließbare Öffnung zum Lenzen zwecks genauer Einstellung des Tiefganges bei unterschiedlichem Salzgehalt im Wasser, der die Tragfähigkeit der Arme beeinflussen kann
17 = Verbindungsschlauch, der die beiden Vertiefungen der Auffangarme 13 und 13b in Bugnähe am Boden miteinander verbindet, zwecks gleichmäßigen Wasserspiegel.

**Patentanspruch**

Ölauffangvorrichtung zum Einbau an Tankschiffen, bestehend

aus zwei, dem wechselnden Tiefgang des Tankschiffes sich selbsttätig anpassenden Auffangarmen (13, 13a), welche mit Hilfe eines Hydraulikzylinders auseinander und zusammenfahrbar sind,
einen Auffangbehälter (2) und
einer Pumpe (4) zum Hochpumpen des Wasser-Ölgemisch in einen
Sammelbehälter,
dadurch gekennzeichnet, daß
der Auffangbehälter (2) im Bug des Tankschiffes eingebaut ist und teilweise aus diesem herausragt,
zu beiden Seiten des herausragenden Teils des Auffangbehälters eine Nut (2b) bildende Führungen vorgesehen sind,
in der Nut (2b) eine eine Einströmöffnung (2d) sowie Scharniere (9, 9a) zur Befestigung der Auffangarme (13, 13a) aufweisende Platte (2a) auf- und abgleitbar gelagert ist,
vor der Pumpe (4) eine Zerkleinerungsvorrichtung vorgesehen ist, und daß
eine elektronisch gesteuerte Kläranlage (5) vorgesehen ist, von der aus das Öl durch ein Überlaufrohr (5a) in Tanks geleitet wird und das Wasser durch ein elektronisch gesteuertes Magnetventil (5c) in das Gewässer zurückfließt.

## Claim.

Oil-collector for tankers, consisting of two collector arms (13, 13a), which adjust automatically to the changing draught of the tanker, and which can be moved apart and together by a hydraulic cylinder,
a collector tank (2) and ;
a pump (4) for lifting the water/oil mix to a ;
holding tank,
characterised in that :
the collector tank (2) is built into the tanker's bow, and projects partially therefrom ;
there are provided, on both sides of the projecting portion of the collector tank (2), guides forming a groove (2b) ;
there is mounted in groove (2b) a plate (2a), which can slide up and down, and which has an inlet opening (2d) and hinges (9, 9a) for attaching the collector arms (13, 13a) ;
a reduction/grinding device (3) is provided in front of pump (4), and that
an electrically-controlled clarifier (5) is provided, from which the oil is passed via an overflow tube (5a) into tanks, and the water flows through an electronically-controlled magnet valve (5c) into the sea.

## Revendication

Dispositif pour collecter du pétrole, destiné à être monté sur des pétroliers et se composant de :
deux bras de réception (13, 13a) s'adaptant automatiquement au tirant d'eau variable du pétrolier, et qui peuvent être écartés ou rapprochés par un vérin hydraulique,
un récipient-collecteur (2) et,
une pompe (4) pour pomper le mélange eau-pétrole dans un
récipient-collecteur,
caractérisé en ce que :
le récipient-collecteur (2) est intégré à la proue du pétrolier et est partiellement en saillie par rapport à celle-ci,
des deux côtés de la partie en saillie du récipient-collecteur (2), il est prévu une rainure (2b) formant des moyens de guidage,
dans la rainure (2b) peut monter et descendre en coulissement une plaque (2a) munie d'un orifice d'entrée (2d) ainsi que de charnière (9, 9a) pour fixer les bras collecteurs (13, 13a),
en avant de la pompe (4), il est prévu un dispositif-broyeur (3) et en ce que,
il est prévu une installation d'assainissement (5) à commande électrique qui transfère le pétrole par un tuyau de trop-plein (5a) dans un réservoir et en ce que l'eau est rejetée à l'extérieur par l'intermédiaire d'une électro-vanne (5c) à commande électronique.

BLATT 1

0 193 620

Abb. 4  BLATT 2

Abb. 5

Abb. 3

0 193 620

## BLATT 3

9C  16  16α  16a  15α  13b  13  14  13c

A2b.6

17

13c

16b  9b  13b  15α  13a

0 193 620

BLATT 4

0 193 620